# EUROPEAN PATENT APPLICATION

(11) **EP 4 005 925 A1**
(43) Date of publication of application: **01.06.2022**
(21) Application number: 21205261.7
(22) Date of filing: 28.10.2021
(51) Int. Cl.: B64D 13/06

(54) **AMBIENT AIR ARCHITECTURE WITH SINGLE AIR CYCLE MACHINE AND HIGH PRESSURE WATER SEPARATOR**

(30) Priority: 30.11.2020 US 202017107337
(71) Applicant: Hamilton Sundstrand Corporation, Charlotte, NC 28217-4578 (US)
(72) Inventor: BRUNO, Louis J., Ellington, 06029 (US); HO, Tony, Glastonbury, 06033 (US); COUTIN, Aiden, Enfield, CT, 06082 (US)
(74) Representative: Dehns

(57) **Abstract**

An environmental control system (20) of an aircraft includes a plurality of inlets for receiving a first medium, a second medium, and a third medium and an outlet for delivering a conditioned form of the first medium to at least one load of the aircraft. A compression device (40) is arranged in fluid communication with the plurality of inlets and the outlet. The compression device (40) includes a plurality of turbines including a first turbine and a second turbine configured to provide energy by expanding one or more mediums of the plurality of mediums and a compressor (42) configured to receive energy from the one or more mediums expanded across at least one of the plurality of turbines. Energy derived from the second medium and/or the third medium within the second turbine is used to compress the first medium at the compressor.

## Description

### BACKGROUND

Embodiments of the disclosure relate to environmental control systems, and more specifically to an environmental control system of an aircraft.

Aircraft need to have their internal environment controlled. In general, contemporary air conditioning systems are supplied a pressure at cruise that is approximately 30 psig to 35 psig. The trend in the aerospace industry today is towards systems with higher efficiency. One approach to improve efficiency of an aircraft environmental control system is to eliminate the bleed air entirely and use electrical power to compress outside air. A second approach is to use lower engine pressure. The third approach is to use the energy in the cabin outflow air to compress outside air and bring it into the cabin. Each of these approaches provides a reduction in airplane fuel burn.

### BRIEF DESCRIPTION

In an embodiment, an environmental control system of an aircraft includes a plurality of inlets for receiving a first medium, a second medium, and a third medium and an outlet for delivering a conditioned form of the first medium to at least one load of the aircraft. A compression device is arranged in fluid communication with the plurality of inlets and the outlet. The compression device includes a plurality of turbines including a first turbine and a second turbine configured to provide energy by expanding one or more mediums of the plurality of mediums and a compressor configured to receive energy from the one or more mediums expanded across at least one of the plurality of turbines. During a first mode of operation, energy derived from the second medium within the second turbine is used to compress the first medium at the compressor. During a second mode of operation, energy derived from both the second medium and the third medium within the second turbine is used to compress the first medium at the compressor.

In addition to one or more of the features described above, or as an alternative, in further embodiments the first turbine is configured to receive and extract work from the first medium.

In addition to one or more of the features described above, or as an alternative, in further embodiments the first medium is only provided to the first turbine of the plurality of turbines.

In addition to one or more of the features described above, or as an alternative, in further embodiments the second turbine includes a first nozzle for receiving the second medium and a second nozzle for receiving the third medium.

In addition to one or more of the features described above, or as an alternative, in further embodiments in the second mode of operation, the second medium and the third medium are mixed at a mixing point located at an outlet of the second turbine.

In addition to one or more of the features described above, or as an alternative, in further embodiments the compressor is operable to receive the first medium.

In addition to one or more of the features described above, or as an alternative, in further embodiments comprising a heat exchanger arranged in fluid communication with the compression device, wherein the first medium output from the compressor is cooled by the third medium.

In addition to one or more of the features described above, or as an alternative, in further embodiments the first medium is ram air or fresh air.

In addition to one or more of the features described above, or as an alternative, in further embodiments the second medium is bleed air and the third medium is cabin discharge air.

In addition to one or more of the features described above, or as an alternative, in further embodiments comprising a ram air circuit including a ram air shell having at least one heat exchanger positioned therein, the at least one heat exchanger being fluidly connected to an outlet of the compressor; and a dehumidification system arranged in fluid communication with the ram air circuit.

In addition to one or more of the features described above, or as an alternative, in further embodiments comprising a fan arranged within the ram air shell to move a flow of ram air across the at least one heat exchanger.

In addition to one or more of the features described above, or as an alternative, in further embodiments the fan is part of the compression device.

In addition to one or more of the features described above, or as an alternative, in further embodiments the fan is separate from the compression device.

In addition to one or more of the features described above, or as an alternative, in further embodiments the dehumidification system includes a high-pressure water separator.

In addition to one or more of the features described above, or as an alternative, in further embodiments the second medium and the third medium output from the second turbine are exhausted into the ram air circuit downstream from the at least one heat exchanger.

In addition to one or more of the features described above, or as an alternative, in further embodiments the second medium and the third medium output from the second turbine are exhausted overboard.

In addition to one or more of the features described above, or as an alternative, in further embodiments comprising a heat exchanger arranged in fluid communication with the at least one compression device, wherein the first medium output from the at least one compression device is cooled by the third medium.

In addition to one or more of the features described above, or as an alternative, in further embodiments the first mode of operation is a low-altitude mode.

In addition to one or more of the features described above, or as an alternative, in further embodiments comprising a valve arranged downstream from the inlet associated with the third medium wherein in the first mode of operation, the valve is closed such that only the second medium is provided to the second turbine.

In addition to one or more of the features described above, or as an alternative, in further embodiments the second mode of operation is a high-altitude mode.

### BRIEF DESCRIPTION OF THE DRAWINGS

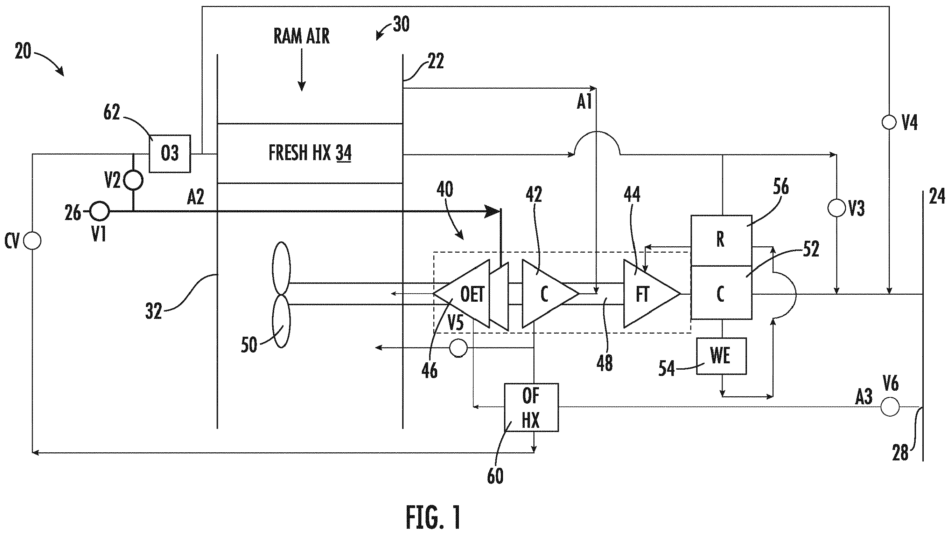

The following description should not be considered limiting in any way. With reference to the accompanying drawing, like elements are numbered alike:

The Figure is a simplified schematic of an environmental control system of a vehicle according to another embodiment.

### DETAILED DESCRIPTION

A detailed description of one or more embodiments of the disclosed apparatus and method are presented herein by way of exemplification and not limitation with reference to the Figure.

Embodiments herein provide an environmental control system of an aircraft that mixes mediums from different sources to power the environmental control system and to provide cabin pressurization and cooling at a high fuel burn efficiency. The medium can generally be air, while other examples include gases, liquids, fluidized solids, or slurries.

With reference now to the Figure, a schematic diagram of a portion of an environment control system (ECS) 20, such as an air conditioning unit or pack for example, is depicted according to non-limiting embodiments. Although the environmental control system 20 is described with reference to an aircraft, alternative applications are also within the scope of the disclosure. As shown in the Figure, the system 20 can receive a first medium A1 at a first inlet 22 and provides a conditioned form of the first medium A1 to a volume 24. In an embodiment, the first medium A1 is fresh air, such as outside air for example. The outside air can be procured via one or more scooping mechanisms, such as an impact scoop or a flush scoop for example. Thus, the inlet 22 can be considered a fresh or outside air inlet. In an embodiment, the first medium A1 is ram air drawn from a portion of a ram air circuit to be described in more detail below. Generally, the first medium A1 described herein is at a temperature equal to a temperature of the air outside of the aircraft. Further, a pressure of the first medium at the inlet 22 is an ambient pressure equal to an air pressure outside of the aircraft when the aircraft is on the ground and between an ambient pressure and a cabin pressure when the aircraft is in flight.

The system 20 may additionally be configured to receive a second medium A2 at a second inlet 26. In embodiments where the environmental control system 20 is used in an aircraft application, the second medium A2 is bleed air, which is pressurized air originating from, i.e. being "bled" from, an engine or auxiliary power unit of the aircraft. It shall be understood that one or more of the temperature, humidity, and pressure of the bleed air can vary based upon the compressor stage and revolutions per minute of the engine or auxiliary power unit from which the air is drawn.

The system 20 can further receive a third medium A3 at an inlet 28. In one embodiment, the inlet 28 is operably coupled to a volume 24, such as the cabin of an aircraft, and the third medium A3 is cabin discharge air, which is air leaving the volume 24 and that would typically be discharged overboard. In some embodiments, the system 20 is configured to extract work from the third medium A3. In this manner, the pressurized air A3 of the volume 24 can be utilized by the system 20 to achieve certain operations.

The environmental control system 20 includes a ram air circuit 30 including a shell or duct, illustrated schematically in broken lines at 32, within which one or more heat exchangers are located. The shell 32 can receive and direct a medium, such as ram air for example, through a portion of the system 20. The one or more heat exchangers are devices built for efficient heat transfer from one medium to another. Examples of the types of heat exchangers that may be used, include, but are not limited to, double pipe, shell and tube, plate, plate and shell, adiabatic shell, plate fin, pillow plate, and fluid heat exchangers.

The one or more heat exchangers arranged within the shell 32 may be referred to as ram heat exchangers. In the illustrated, non-limiting embodiment, the ram air circuit 30 ram heat exchanger includes a single heat exchanger 34. However, embodiments including additional heat exchangers are also within the scope of the disclosure. At the heat exchanger 34, ram air, such as outside air for example, acts as a heat sink to cool a medium passing there through, for example the first medium A1.

The system 20 additionally includes a compression device 40. In the illustrated, non-limiting embodiment, the compression device 40 is a mechanical device that includes components for performing thermodynamic work on a medium (e.g., extracts work from or applies work to the first medium A1, the second medium A2, and/or the third medium A3 by raising and/or lowering pressure and by raising and/or lowering temperature). Examples of a compression device 40 include an air cycle machine, such as a two-wheel air cycle machine, a three-wheel air cycle machine, a four-wheel air cycle machine, etc.

In the non-limiting embodiment, the compression device 40 is a four-wheel air cycle machine including a compressor 42 and a plurality of turbines. The compressor 42 is a mechanical device configured to raise a pressure of a medium and can be driven by another mechanical device (e.g., a motor or a medium via a turbine). Examples of compressor types include centrifugal, diagonal or mixed-flow, axial-flow, reciprocating, ionic liquid piston, rotary screw, rotary vane, scroll, diaphragm, air bubble, etc. As shown, the compressor 42 is configured to receive and pressurize the second medium A1.

In the illustrated embodiment, the compression device 40 includes a turbine 44, also referred to herein as a fresh air turbine, and a power turbine 46 operably coupled to each other and to the compressor 42 via a shaft 48. The turbines 44 and 46 are mechanical devices that expand a medium and extract work therefrom (also referred to as extracting energy) to drive the compressor 42 via the shaft 48. The turbines 44, 46 are operable independently or in combination, to drive the compressor 42 via the shaft 48.

In an embodiment, the power turbine 46 is a dual entry turbine capable of receiving a plurality of flows of mediums simultaneously. A dual entry turbine typically has multiple nozzles, each of which is configured to receive a distinct flow of medium at a different entry point, such that multiple flows can be received simultaneously. For example, the power turbine 46 can include a plurality of inlet flow paths, such as an inner flow path and an outer flow path, to enable mixing of the medium flows at the exit of the power turbine 46. The inner flow path can be a first diameter, and the outer flow path can be a second diameter. Further, the inner flow path can align with one of the first or second nozzles, and the outer flow path can align with the other of the first or second nozzles.

As shown, a fan 50 is disposed within the ram air shell 32. The fan 50 is a mechanical device that can force via push or pull methods a medium (e.g., ram air) through the shell 32 across the one or more ram air heat exchangers 34. In the illustrated, non-limiting embodiment, the fan 50 is part of the compression device 40. For example, the fan 50 is operably coupled to the compressor 42 and the turbine 44 of the compression device 40 via the shaft 48. However, in other embodiments, the fan 50 is a separate component driven by any suitable means. Examples of such a fan 50 include an electrically driven fan, a tip turbine fan, or a fan that is part of a simple cycle machine.

The system 20 additionally includes a dehumidification system. In the illustrated, non-limiting embodiment of the Figure, the dehumidification system includes a condenser 52, and a water extractor or collector 54, and a reheater 56 arranged in series. The condenser 52, the water extractor 54, and the reheater 56 may be arranged in fluid communication with the first medium A1.The reheater 56 and the condenser 52 are particular types of heat exchangers. The water extractor 54 is a mechanical device that performs a process of taking water from any source, such as bleed-air. In combination, the reheater 56, the condenser 52, and/or the water extractor 54 may form a high-pressure water separator because the pressure of the medium provided thereto is at, or very close to its highest pressure within the system 20.

The elements of the system 20 are connected via valves, tubes, pipes, and the like. Valves (e.g., flow regulation device or mass flow valve) are devices that regulate, direct, and/or control a flow of a medium by opening, closing, or partially obstructing various passageways within the tubes, pipes, etc. of the system. Valves can be operated by actuators, such that flow rates of the medium in any portion of the system 20 can be regulated to a desired value. For instance, a first valve V1 may be configured to control a supply of the second medium A2 to the system 20 and valve V6 may be operable to control a supply of the third medium A3 to the system 20. In an embodiment, valve V2 may be operable to divert a portion of the second medium A2 to the heat exchanger 34 such that medium A2 makes up a percentage of the conditioned medium provided to volume 24. Operation of valve V3 may be used to allow at least a portion of the first medium A1 output from the heat exchanger 34 to bypass the dehumidification system and the turbine 44 of the compression device 40. Similarly, operation of valve V4 may be configured to allow a portion of the first medium A1 output from the compressor 42 to bypass the ram air circuit, dehumidification system, and the turbine 44 of the compression device 40. In an embodiment, valve V5 is a surge control valve, operable to exhaust a portion of the first medium A1 output from the compressor 42 overboard or into the ram air circuit 30 to prevent a compressor surge.

The system 20 is operable in a plurality of modes, selectable based on a flight condition of the aircraft. In an embodiment, the system 20 is operable in a first mode when the aircraft is on the ground and in a second mode when the aircraft is in flight, such as normal high-altitude cruise, climb, and/or descent for example. In both the first mode and the second mode, only the first medium is provided at an outlet of the system 20, for example to the cabin 24. However, in embodiments where one or more failures occurs, the second medium A2 may alternatively, or additionally be provided to the cabin 24.

During operation in the first mode, valve V1 is open such that the second medium A2 enters the system 20 via inlet 26. In an embodiment, the flow of second medium A2 is provided directly to an inlet or nozzle of the dual entry power turbine 46. As a result, the temperature and pressure of the second medium A2 provided to the power turbine 46 is substantially identical to the temperature and pressure of the second medium A2 at the inlet 26. It should be understood that "substantially identical" as used herein is intended to include the minimal losses that occur as a fluid flows over an extended distance through a conduit. Within the power turbine 46, the second medium A2 is expanded and work is extracted therefrom. The work extracted by the power turbine 46 is used to drive the compressor 42 and the fan 50 via shaft 48. The cooler, lower pressure second medium A2 output from the power turbine 46 is then discharged overboard or is exhausted into the ram air circuit 30, for example downstream of the ram air heat exchanger 34 with respect to the flow of ram air.

The first medium A1 enters the ECS 20 at the inlet 22. Although the first medium A1 is illustrated as ram air drawn from a portion of the ram air circuit 30 upstream from the ram air heat exchangers 34, any flow of fresh or outside air is suitable. In the illustrated, non-limiting embodiment, the first medium A1 is provided from the inlet 22 directly to the inlet of the compressor 42 via a conduit. However, embodiments where one or more components, such as a heat exchanger for example, are arranged upstream from the compressor 42 are also within the scope of the disclosure. Within the compressor 42, the first medium A1 is compressed causing at least one of the temperature and the pressure of the first medium A1 to increase.

The heated, pressurized first medium A1 output from the compressor 42 may then be provided to an outflow heat exchanger 60 and/or an ozone remover 62, before being provided to the secondary heat exchanger 36 where it is cooled by ram air. In an embodiment, in the first mode of operation, no other fluid is provided to the outflow heat exchanger 60. As a result, the temperature of the first medium A1 does not change as it passes through the outflow heat exchanger 60. Although the outflow heat exchanger 60 is shown in the illustrated non-limiting embodiment as being located upstream from the ozone remover 62 relative to the flow of the first medium A1, embodiments where the outflow heat exchanger 60 is located downstream from the ozone remover 62 relative to the flow of the first medium A1 are also contemplated herein. Additionally, embodiments where the ozone remover 62 is located upstream of the split of medium A1 towards valve V4 are also contemplated herein.

As shown, when valve V4 is closed, the first medium A1 output from the ozone remover 62 is provided to at least one ram air heat exchanger 34. The fan 50 of the compression device 40 is used to move air, such as ram air for example, through or across the ram air heat exchanger 34 to further cool the temperature of the first medium A1 within the ram air heat exchanger 34.

The first medium A1 output from the ram air heat exchanger 34 is typically provided to the dehumidification system. The first medium A1 is configured to flow through the reheater 56, the condenser 52, and the water extractor 54 sequentially. The first medium A1 is cooled and further cooled within the reheater 56 and the condenser 52, respectively, causing any moisture within the first medium A1 to condense. This moisture is then removed from the flow of first medium A1 within the water extractor 54. The resulting cool, dry first medium A1 output from the water extractor 54 is configured to pass through the reheater 56 again. Within this second pass through the reheater 56, the first medium A1 output from the water extractor 54 is at least partially heated by the first medium A1 output from the ram air circuit 30 to produce a warm, dry first medium A1.

From the reheater 56, the first medium A1 is provided to an inlet of the turbine 44 of the compression device 40. Within the turbine 44, the first medium A1 is expanded and work is extracted therefrom. The work extracted by the turbine 44 is combined with the work extracted from the second medium A2 in the power turbine 46 to drive the compressor 42 and the fan 50 via shaft 48. The cooled, reduced pressure first medium A1 output from the turbine 44 is then provided to a second pass of the condenser 52, where it is heated by the flow of first medium A1 output from the first pass of the reheater 56 prior to being delivered to one or more loads of the aircraft, such as the volume 24 for example.

Operation of the ECS 20 in a second mode of operation, such as when the aircraft is in flight, is similar to operation in the first mode. However, during operation in the second mode, valve V6 is open and a flow of third medium is provided to the system 20 via the inlet 28. In the second mode, the outflow heat exchanger 60 utilizes the third medium A3, such as cabin discharge air sourced from the volume 24 for example, to cool the first medium A1 output from the compressor 42.

As previously described, in an embodiment, a first inlet or nozzle of the dual entry power turbine 46 is arranged downstream from and in series with the inlet 26 of the second medium A2. Accordingly, during both a first, low-altitude mode of operation and a second, high-altitude mode of operation, the second medium A2 is provided to the power turbine 46. In the second, high-altitude mode of operation, work is also extracted from the third medium A3. As shown, the third medium A3 may be provided to a second inlet or nozzle of the dual entry power turbine 46. In such embodiments, the mixing point of the second medium A2 and the third medium A3 can be at the dual entry power turbine 46, such as at an outlet of the turbine 46 for example, or alternatively, may be downstream therefrom. From the outlet of the turbine 46, both the second medium A2 and the third medium A3 may be discharged overboard, or alternatively, exhausted into the ram air circuit 30 downstream from the ram air heat exchanger 34 with respect to the flow of ram air.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. An environmental control system of an aircraft comprising:
a plurality of inlets for receiving a plurality of mediums including a first medium, a second medium, and a third medium;
an outlet for delivering a conditioned form of the first medium to at least one load of the aircraft; and
a compression device (40) arranged in fluid communication with the plurality of inlets and the outlet, the compression device including a plurality of turbines configured to provide energy by expanding one or more mediums of the plurality of mediums, and a compressor (42) configured to receive energy from the one or more mediums expanded across at least one of the plurality of turbines, wherein the plurality of turbines includes a first turbine and a second turbine;
wherein during a first mode of operation, energy derived from the second medium within the second turbine is used to compress the first medium at the compressor and during a second mode of operation, energy derived from both the second medium and the third medium within the second turbine is used to compress the first medium at the compressor.

2. The environmental control system of claim 1, wherein the first turbine is configured to receive and extract work from the first medium.

3. The environmental control system of claim 1 or 2, wherein the first medium is only provided to the first turbine of the plurality of turbines.

4. The environmental control system of any preceding claim, wherein the second turbine includes a first nozzle for receiving the second medium and a second nozzle for receiving the third medium.

5. The environmental control system of any preceding claim, wherein in the second mode of operation, the second medium and the third medium are mixed at a mixing point located at an outlet of the second turbine.

6. The environmental control system of any preceding claim, wherein the compressor (42) is operable to receive the first medium, and preferably further comprising a heat exchanger arranged in fluid communication with the compression device, wherein the first medium output from the compressor is cooled by the third medium.

7. The environmental control system of any preceding claim, wherein the first medium is ram air or fresh air, and preferably wherein the second medium is bleed air and the third medium is cabin discharge air.

8. The environmental control system of any preceding claim, further comprising:
a ram air circuit (30) including a ram air shell (32) having at least one heat exchanger positioned therein, the at least one heat exchanger being fluidly connected to an outlet of the compressor; and
a dehumidification system arranged in fluid communication with the ram air circuit.

9. The environmental control system of claim 8, further comprising a fan (50) arranged within the ram air shell to move a flow of ram air across the at least one heat exchanger.

10. The environmental control system of claim 9, wherein the fan (50) is part of the compression device; or wherein the fan (50) is separate from the compression device.

11. The environmental control system of claim 8, wherein the dehumidification system includes a high-pressure water separator; and/or wherein the second medium and the third medium output from the second turbine are exhausted into the ram air circuit downstream from the at least one heat exchanger.

12. The environmental control system of any preceding claim, wherein the second medium and the third medium output from the second turbine are exhausted overboard.

13. The environmental control system of any preceding claim, further comprising a heat exchanger arranged in fluid communication with the at least one compression device, wherein the first medium output from the at least one compression device is cooled by the third medium.

14. The environmental control system of any preceding claim, wherein the first mode of operation is a low-altitude mode, and preferably further comprising a valve arranged downstream from the inlet associated with the third medium wherein in the first mode of operation, the valve is closed such that only the second medium is provided to the second turbine.

15. The environmental control system of any preceding claim, wherein the second mode of operation is a high-altitude mode.
